# EUROPEAN PATENT SPECIFICATION

(11) **EP 2 384 615 B1**
(45) Date of publication and mention of the grant of the patent: **07.10.2015**
(21) Application number: 11164860.6
(22) Date of filing: 04.05.2011
(51) Int. Cl.: A01D 78/04, A01D 78/06

(54) **Double comb side delivery rake for side windrows**
Doppelkamm-Seitenausgaberechen für Seitenschwaden
Râteau à alimentation latérale double peigne pour andains latéraux

(30) Priority: 04.05.2010 IT MI20100782
(43) Date of publication of application: 09.11.2011
(73) Proprietor: Repossi Macchine Agricole S.r.l., 27022 Casorate Primo (PV) (IT)
(72) Inventor: Repossi, Gabriele, 27022, CASORATE PRIMO (IT); Repossi, Francesco, 27022, CASORATE PRIMO (IT)
(74) Representative: Bergadano, Mirko

(56) References cited:
- DE-A1-102005 045 823
- FR-A1- 2 909 834
- NL-A- 8 902 002
- US-A- 2 929 187
- US-A- 3 834 142
- US-A- 3 914 928

## Description

The present invention relates to a double comb side delivery rake for side windrows.

As it is known, side delivery rakes are used in agriculture for moving forage after thrashing and for collecting the processed material in aisles, usually called windrows.

The side delivery rakes most commonly used are rotary type or comb type.

Rotary side delivery rakes use a plurality of rakes mounted on one or more wheels arranged substantially horizontal while in use.

Comb side delivery rakes are provided with one or more windrowing assemblies, each one comprising combs movable in substantially vertical planes operated by means of pairs of rotating discs, to which the ends of the combs are connected.

A common problem to both types of side delivery rakes is the disadvantaged ratio between the size in working configuration and in road transport configuration. Often, the rules impose a maximum size with regard to the transport means for use on the road without restrictions, or else it is required to arrange for special transport, for example, with support means equipped with warning devices preceding and following the agricultural vehicle. To avoid such situations, sometimes larger than necessary transport means or, alternatively, more compact side delivery rakes are used. In both cases, however, there are disadvantages in terms of costs and consumption. A side delivery rake of lesser spread, in fact, requires a greater number of rows to process a given area and therefore work time and traveled distances are higher.

Examples of known side delivery rakes are disclosed in NL 8 902 002 A and in FR 2 909 834 A1.

NL 8 902 002 A describes a side delivery rake with a frame that has coupling means for front and rear connection to a transport means and carries two windrowing assemblies. One of the windrowing assemblies projects with respect to the coupling means, on the side of the transport means. The frame comprises uprights, connected by a fixed transverse bar that diagonally runs over both the windrowing assemblies.

FR 2 909 834 A1 discloses a side delivery rake having windrowing assemblies that can be rotated between a lowered position for working and a lifted position for transport.

The aim of the present invention is therefore to provide a side delivery rake that can overcome the described limitations.

A side delivery rake is provided according to the present invention as defined in claim 1.

The present invention will now be described with reference to the attached drawings, which illustrate a non limited example of embodiment, in which:
- Figure 1 is a plan view from above of a side delivery rake according to an embodiment of the present invention;
- Figure 2 is a three-quarters rear perspective view from above of the side delivery rake of Figure 1, with parts removed;
- Figure 3 is a three-quarters frontal perspective view from above of part of the side delivery rake of Figure 1, with parts removed;
- Figure 4 shows details of the side delivery rake of Figure 1;
- Figure 5 is a plan view from above of the side delivery rake of Figure 1 coupled to a transport means in a working configuration;
- Figure 6 is a view of the side delivery rake in the configuration of Figure 5, taken frontally with respect to the transport means;
- Figure 7 is a side view of the side delivery rake of Figure 1 coupled to a transport means in a configuration during road transport; and
- Figure 8 is a view of the side delivery rake in the configuration of Figure 5, taken from the rear with respect to the transport means.

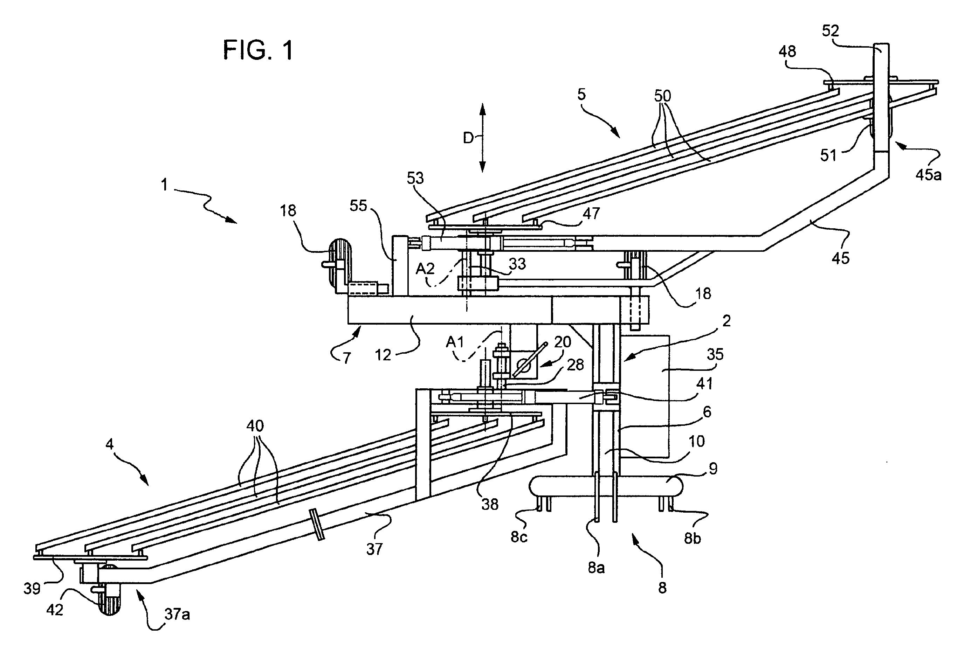

Referring to Figure 1, a side delivery rake, shown in its entirety with the number 1, comprises a frame 2, a first windrowing assembly 4 and a second windrowing assembly 5.

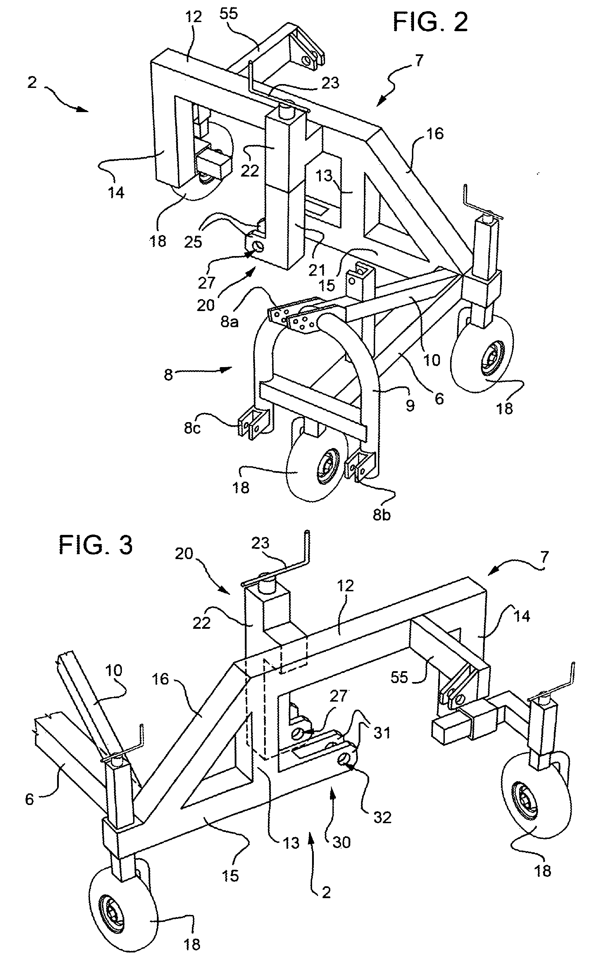

The frame 2, shown in more detail in Figures 2 and 3, comprises a longitudinal bar 6 and a bridge structure 7.

The longitudinal bar 6 is parallel to a traveling direction D of the side delivery rake 1 (at least when the side delivery rake 1 is conducted along a substantially straight path) and has at one end a three-point linkage 8.

Since, as will be later explained, the side delivery rake 1 can be connected to both the front and rear of a transport means (e.g. a tractor), the traveling direction D stands to indicate here and hereinafter a line and will not take into account orientation, unless otherwise specified. Furthermore, the traveling direction D will be referred to when the side delivery rake 1 is led along a substantially straight path.

The three-point linkage 8 is built on a support 9 fixed to the longitudinal bar 6 and comprises an upper linkage point 8a and two lower linkage points 8b, 8c. A reinforcement bar 10 is fixed at an angle between an end of the longitudinal bar 6 opposite to the three-points linkage 8 and the top of the support 9, where there is the upper linkage point 8a.

The bridge structure 7 comprises a crosspiece 12, horizontal and perpendicular to the traveling direction D, a first upright 13 and a second upright 14. The first upright 13 is connected to the longitudinal bar 6 by a horizontal connecting bar 15 and a transverse connecting bar 16, by which the first upright 13 forms a triangle. The longitudinal bar 6 is thus arranged on the side of the bridge structure 7.

The frame is supported by three wheels 18, respectively connected to the ends of the longitudinal bar 6 and to the second upright 14. Preferably, the wheels 18 are equipped with mechanisms to adjust the height, not shown herein for simplicity.

An anchorage 20 is fixed to one face of the crosspiece 12 facing the three-point linkage 8, for coupling the first windrowing assembly 4.

In one embodiment, the anchorage 20 comprises a vertical bar 21 slidable in a vertical prismatic guide 22, fixed to the crosspiece 12, and is adjustable in height by a threaded coupling (not shown for simplicity), operated by a crank 23.

Support plates 25, taken to a lower end of the vertical bar 21, present respective holes aligned along an axis A1 parallel to the traveling direction D and define a seat 27 for rotatably housing a connecting pin 28 of the first windrowing assembly 4. Therefore, the axis A1 is also a rotation axis for the pin 28.

An anchorage 30 for the connection of the windrowing assembly is led by the first upright 13 of frame 2. More in detail, the anchorage 30 comprises support plates 31 that extend from the lower end of the first upright 13 in the direction of the second upright 14. Holes in the respective support plates 31 and aligned along an axis A2 parallel to the traveling direction D define a seat 32 for rotatably housing a connecting pin 33 of the second windrowing assembly 5.

A hydraulic unit 35, containing hydraulic drivers for the windrowing assemblies 4, 5 is carried by the frame 2, on the side of the longitudinal bar 6.

Again referring to Figure 1, the first windrowing assembly 4 comprises a support bar 37, an inner disc 38, an outer disc 39 and a plurality of combs 40 (e.g. four or five). A first portion of the first windrowing assembly 4 is longitudinally comprised between the bridge structure 7 and the three points linkage 8 and is disposed on the side of the longitudinal bar 6. A second portion of the first windrowing assembly 4 projects with respect to the three points linkage in the traveling direction D of the side delivery rake 1.

More specifically, the support bar 37 is rotatably coupled to the anchorage 20 (see also Figure 2) through the connecting pin 28, which is inserted into the seat 27, and extends outwards at an angle to the traveling direction D and, consequently, to the rotation axis A1 of the connecting pin 28. One outer end 37a of the support bar 37 projects with respect to the three-point linkage 8 in the traveling direction D. A wheel 41 is coupled to the outer end 37a of the support bar 37.

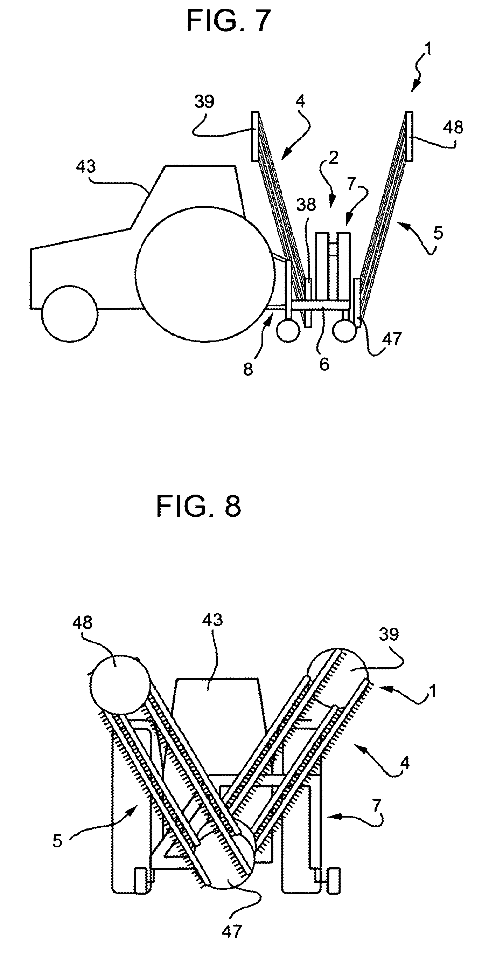

A hydraulic cylinder 41 is connected to the reinforcement bar 10 of frame 2 and to the support bar 37, outside of the support pin 28, and is driven by the hydraulic control unit 35 for rotating the first windrowing assembly 4 between a working position, in which the first windrowing assembly 4 is lowered, and one in which the first windrowing assembly 4 is raised. As shown in Figure 7, since the first windrowing assembly 4 projects with respect to the three points linkage 8 in the traveling direction D, in the transport position the first windrowing assembly 4 projects in part over a transport means to which the side delivery rake 1 is connected (such as a tractor 43, only schematically shown).

The inner disc 38 is carried by the support bar 37 near the connecting pin 28, laterally outwards with respect to the support bar 37 itself. The outer disc 39 is instead carried by the support bar 36 to the outer end 37a.

The inner disc 38 and the outer disc 38 are parallel to each other and have respective rotation axes parallel to the traveling direction D of the side delivery rake 1. In addition, the outer disc 39 is offset with respect to the inner disc 38 in the traveling direction D and projects in the same direction, with respect to the three-point linkage 8 on the side of the transport means.

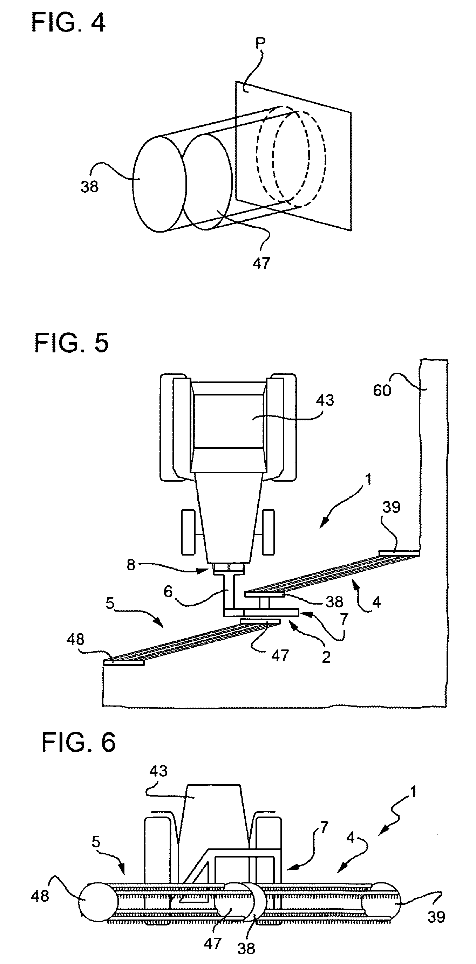

Each comb 40 comprises an horizontal bar, having opposite ends respectively connected to the inner disc 38 and the outer disc 39, and a plurality of vertical teeth (see for example Figure 6, where the teeth are only schematically shown).

The second windrowing assembly 5 comprises a support bar 45, an inner disc 47, an outer disc 48 and a plurality of combs 50 (e.g. four or five).

The support bar 45 is rotatably coupled to the anchorage 30 (see also Figure 3) through the connecting pin 33 which is inserted in the seat 32 and projects outwards in the opposite direction with respect to the first windrowing assembly 4. In addition, the support bar 45 is arranged on the opposite side of the bridge structure 7 of the frame 2 with respect to the first windrowing assembly 4. A wheel 51 is connected to an outer end 45a of the support bar 45. In addition, an appendix 52, carried by the support bar 45, extends beyond the end 45a of the support bar 45 in the traveling direction D of the side delivery rake 1 and defines a linkage point for the outer disc 48.

A hydraulic cylinder 53 is connected to an appendage 55 on the crosspiece 12 of frame 2 and the support bar 45 of the second windrowing assembly 5, outside of the connecting pin 33, and is driven by a hydraulic control unit 35 for rotating the second windrowing assembly 5 between a working position, in which the second windrowing assembly 5 is lowered, and a transport position, in which the second windrowing assembly 5 is raised.

The inner disc 47 of the second windrowing assembly 5 is coupled to the support bar 45 near the connecting pin 33.

Each comb 50 comprises an horizontal bar (Figure 6), having opposite ends respectively connected to the inner disc 47 and the outer disc 48, and a plurality of vertical teeth (not shown in detail). The inner disc 47 and the outer disc 48 are parallel to each other and have respective rotation axes parallel to the traveling direction of the side delivery rake. The outer disc 48 is offset with respect to the inner disc 47 in the traveling direction D, so that, in working configuration, the combs 50 of the second windrowing assembly 5 are substantially parallel to the combs 40 of the first windrowing assembly 4 and arranged in opposite directions.

In addition (Figures 1, 5 and 6), the inner disc 38 of the first windrowing assembly 4 and the inner disc 47 of the second windrowing assembly 5 are arranged so that substantially all of the hay moved from the second windrowing assembly 5 (which is frontally disposed in working configuration) is collected by the first windrowing assembly 4 and moved to form one only side windrows 60. In particular, the inner disc 38 of the first windrowing assembly 4 and the inner disc 47 of the second windrowing assembly 5 are arranged so that their projections along the traveling direction D in a plane P perpendicular to the traveling direction D itself are at least partially overlapped (as shown schematically in Figure 4). In an embodiment not shown, the rotation axes of the internal discs 38, 47 are substantially aligned.

The working opening of the side delivery rake is wide compared to a very small encumbrance on the road, as explained below.

In working configuration, the rake is frontally carried by the tractor 43 and pushed, as shown in Figures 5 and 6, due to the three-points linkage 8. Advantageously, therefore, the hay is moved by the side delivery rake 1 before the passage of the tractor 43. Over-trackage is therefore avoided, which in any case is dangerous and is particularly harmful in the case of certain types of particularly sensitive forage, such as, for example, alfalfa.

The use of combs 40, 50 movable in vertical planes also has the advantage of avoiding contamination of the forage with soil. In fact, the combs 40, 50 skim the ground and tend mainly to raise the forage, rather than simply drag it, allowing among other things, a better aeration of the product. The windrows formed by the side delivery rake 1 are therefore soft and clean and in very good condition for the subsequent passage of a round baler.

For road transport, the first windrowing assembly 4 and second windrowing assembly 5 are lifted and the side delivery rake 1 is connected to the rear of the tractor 43 by way of the three-point linkage 8, as shown in Figures 7 and 8. The lateral encumbrance is reduced to only the frame 2 encumbrance. Longitudinally, i.e. in the traveling direction D, the size of the side delivery rake in itself remains unchanged. However, the first windrowing assembly 4 projects with respect to the three points linkage 8 in the traveling direction D towards the tractor 43 and the longitudinal bar that carries the three-point linkage 8 is disposed to the side of the bridge structure 7. Therefore, when the side delivery rake 1 is attached to a tractor 43 in the road transport configuration, the first windrowing assembly 4 extends partially above the tractor 43 itself. The overall size of the assembly tractor-side delivery rake in the traveling direction D is therefore in fact decreased. This is beneficial as it generally facilitates compliance with road regulations without sacrificing the working opening. In particular, when the constraints imposed by law require that the load does not extend beyond a certain percentage of the transport means, the side delivery rake 1 described herein can also be used with smaller sized tractors. Besides the obvious economic benefit and less fuel consumption, lesser work field trackage must also be considered.

It is also clear that to the described side delivery rake changes and variations can be applied without departing from the scope of the present invention, as defined in the appended claims.

## Claims

1. Side delivery rake for side windrows comprising:
a frame (2), connectable to a transport means (43) for being moved along a traveling direction (D);
a first windrowing assembly (4) and a second windrowing assembly (5), of a comb-like type, carried by the frame (2); and
coupling means (8), configured to be connected to a front of the transport means (43) in a first configuration and to a rear of the transport means (43) in a second configuration, so that the frame (2) is pushed by the transport means (43) in the first configuration and is carried by the transport means (43) in the second configuration;
wherein the first windrowing assembly (4) has a first portion, arranged between the second windrowing assembly (5) and the coupling means (8), and a second portion, projecting with respect to the coupling means (8) according to the traveling direction (D) on the side of the transport means (43);
**characterized in that** the first windrowing assembly (4) and the second windrowing assembly (5) are rotatable with respect to the frame (2) between respective working positions, in which the first windrowing assembly (4) and the second windrowing assembly (5) are lowered, and respective transport position, in which the first windrowing assembly (4) and the second windrowing assembly (5) are lifted.

2. Side delivery rake according to claim 1, wherein the coupling means (8) comprises a three-point linkage (8).

3. Side delivery rake according to claim 1 or 2, wherein the frame (2) comprises a bridge structure (7), transverse with respect to the traveling direction (D), and a longitudinal bar (6), parallel to the traveling direction (D) and laterally connected to the bridge structure (7), and wherein the coupling means (8) are carried by the longitudinal bar (6).

4. Side delivery rake according to claim 3, wherein the first portion of the first windrowing assembly (4) is arranged between the bridge structure (7) and the coupling means (8).

5. Side delivery rake according to claim 3 or 4, wherein the frame (2) comprises an anchorage (20) fixed to a face of the bridge structure (7) facing the coupling means (8) and wherein the first windrowing assembly (4) is rotatably coupled to the anchorage (20).

6. Side delivery rake according to claim 5, wherein the anchorage (20) is adjustable in height.

7. Side delivery rake according to claim 5 or 6, wherein the anchorage (20) comprises a vertical bar (21), slidable in a vertical guide (22) fixed to a crosspiece (12) of the bridge structure (7).

8. Side delivery rake according to any one of the foregoing claims, wherein, in the respective working positions, first combs (40) of the first windrowing assembly (4) and second combs (50) of the second windrowing assembly (5) are substantially parallel and oblique with respect to the traveling direction (D), and the first windrowing assembly (4) and the second windrowing assembly (5) are arranged so that, in use, hay moved by the second windrowing assembly (5) is collected and further moved by the first windrowing assembly (4) for forming a single lateral windrow (60).

9. Side delivery rake according to any one of the foregoing claims, wherein the first windrowing assembly (4) and the second windrowing assembly (5) comprise respective inner discs (38, 47) and respective outer discs (39, 48) and wherein the inner disc (38) of the first windrowing assembly (4) and the inner disc (48) of the second windrowing assembly (5) are arranged so that, when the first windrowing assembly (4) and the second windrowing assembly (5) are in the respective working positions, projections in the traveling direction (D) of the inner disc (38) of the first windrowing assembly (4) and of the inner disc (48) of the second windrowing assembly (5) overlap at least partially.

10. Side delivery rake according to claim 9, wherein rotation axes (A1, A2) of the inner discs (38, 47) are substantially aligned when the first windrowing assembly (4) and the second windrowing assembly (5) are in the respective working positions.

11. Side delivery rake according to claim 9 or 10 as appended to claim 3, wherein the inner disc (38) of the first windrowing assembly (4) is arranged between the inner disc (48) of the second windrowing assembly (5) and the coupling means (8), laterally to the longitudinal bar (6).

12. Side delivery rake according to any one of the foregoing claims, comprising hydraulic lifting means (35, 41, 53), for rotating the first windrowing assembly (4) and the second windrowing assembly (5) between the respective working positions and the respective transport positions.

13. Side delivery rake according to any one of the foregoing claims, wherein the first windrowing assembly (4) and the second windrowing assembly (5) are rotatable about respective axes (A1, A2) substantially parallel to the traveling direction (D) at least in the first configuration.

14. Side delivery rake according to any one of the foregoing claims, wherein the second portion of the first windrowing assembly (4) projects with respect to the coupling means (8) according to the traveling direction (D) on the side of the transport means (43) both in the first configuration and in the second configuration.

15. Agricultural machinery comprising a transport means (43) and a side delivery rake (1) according to any one of the foregoing claims.

## Patentansprüche

1. Seitenablagerechen für Seitenschwader, mit:
einem Rahmen (2), der mit einer Transporteinrichtung (43) verbindbar ist, die dafür vorgesehen ist, entlang einer Fahrtrichtung (D) bewegt zu werden;
einer ersten Schwadeinheit (4) und einer zweiten Schwadeinheit (5) eines Kammtyps, die durch den Rahmen (2) getragen werden; und
einer Kupplungseinrichtung (8), die dafür konfiguriert ist, in einer ersten Konfiguration mit einer Vorderseite der Transporteinrichtung (43) und in einer zweiten Konfiguration mit einer Rückseite der Transporteinrichtung (43) verbunden zu werden, so dass der Rahmen (2) in der ersten Konfiguration durch die Transporteinrichtung (43) gedrückt wird und in der zweiten Konfiguration durch die Transporteinrichtung (43) getragen wird,
wobei die erste Schwadeinheit (4) einen zwischen der zweiten Schwadeinheit (5) und der Kupplungseinrichtung (8) angeordneten ersten Abschnitt und einen zweiten Abschnitt aufweist, der bezüglich der Kupplungseinrichtung (8) auf der Seite der Transporteinrichtung (43) in die Fahrtrichtung (D) hervorsteht;
**dadurch gekennzeichnet, dass**
die erste Schwadeinheit (4) und die zweite Schwadeinheit (5) bezüglich des Rahmens (2) drehbar sind zwischen jeweiligen Arbeitspositionen, in denen die erste Schwadeinheit (4) und die zweite Schadeneinheit (5) abgesenkt sind, und jeweiligen Transportpositionen, in denen die erste Schwadeinheit (4) und die zweite Schwadeinheit (5) angehoben sind.

2. Seitenablagerechen nach Anspruch 1, wobei die Kupplungseinrichtung (8) ein Dreipunktgestänge (8) aufweist.

3. Seitenablagerechen nach Anspruch 1 oder 2, wobei der Rahmen (2) eine sich quer zur Fahrtrichtung (D) erstreckende Brückenstruktur (7) und eine Längsstange (6) aufweist, die sich parallel zur Fahrtrichtung (D) erstreckt und seitlich mit der Brückenstruktur (7) verbunden ist, und wobei die Kupplungseinrichtung (8) durch die Längsstange (6) getragen wird.

4. Seitenablagerechen nach Anspruch 3, wobei der erste Abschnitt der ersten Schwadeinheit (4) zwischen der Brückenstruktur (7) und der Kupplungseinrichtung (8) angeordnet ist.

5. Seitenablagerechen nach Anspruch 3 oder 4, wobei der Rahmen (2) eine Verankerung (20) aufweist, die an einer der Kupplungseinrichtung (8) zugewandten Fläche der Brückenstruktur (7) befestigt ist, und wobei die erste Schwadeinheit (4) mit der Verankerung (20) drehbar verbunden ist.

6. Seitenablagerechen nach Anspruch 5, wobei die Verankerung (20) höhenverstellbar ist.

7. Seitenablagerechen nach Anspruch 5 oder 6, wobei die Verankerung (20) eine vertikale Stange (21) aufweist, die in einer an einem Querstück (12) der Brückenstruktur (7) befestigten vertikalen Führung (22) verschiebbar ist.

8. Seitenablagerechen nach einem der vorangehenden Ansprüche, wobei in den jeweiligen Arbeitspositionen erste Kämme (40) der erste Schwadeinheit (4) und zweite Kämme (50) der zweiten Schwadeinheit (5) im Wesentlichen parallel und schräg zur Fahrtrichtung (D) ausgerichtet sind, und wobei die erste Schwadeinheit (4) und die zweite Schwadeinheit (5) derart angeordnet sind, dass im Betrieb durch die zweite Schwadeinheit (5) bewegtes Heu durch die erste Schwadeinheit (4) gesammelt und weiter bewegt wird, um eine einzige seitliche Schwade (60) zu erzeugen.

9. Seitenablagerechen nach einem der vorangehenden Ansprüche, wobei die erste Schwadeinheit (4) und die zweite Schwadeinheit (5) jeweils eine Innenscheibe (38, 47) und eine Außenscheibe (39, 48) aufweisen, und wobei die Innenscheibe (38) der ersten Schwadeinheit (4) und die Innenscheibe (47) der zweiten Schwadeinheit (5) derart angeordnet sind, dass, wenn die erste Schwadeinheit (4) und die zweite Schwadeinheit (5) sich in den jeweiligen Arbeitspositionen befinden, sich Projektionen der Innenscheibe (38) der ersten Schwadeinheit (4) und der Innenscheibe (47) der zweiten Schwadeinheit (5) in der Bewegungsrichtung (D) zumindest teilweise überlappen.

10. Seitenablagerechen nach Anspruch 9, wobei die Drehachsen (A1, A2) der Innenscheiben (38, 47) im Wesentlichen ausgerichtet sind, wenn die erste Schwadeinheit (4) und die zweite Schwadeinheit (5) sich in den jeweiligen Arbeitspositionen befinden.

11. Seitenablagerechen nach Anspruch 9 oder 10, jeweils abhängig von Anspruch 3, wobei die Innenscheibe (38) der ersten Schwadeinheit (4) zwischen der Innenscheibe (48) der zweiten Schwadeinheit (5) und der Kupplungseinrichtung (8) seitlich von der Längsstange (6) angeordnet ist.

12. Seitenablagerechen nach einem der vorangehenden Ansprüche, mit einer hydraulische Hebeeinrichtung (35, 41, 53) zum Drehen der ersten Schwadeinheit (4) und der zweiten Schwadeinheit (5) zwischen den jeweiligen Arbeitspositionen und den jeweiligen Transportpositionen.

13. Seitenablagerechen nach einem der vorangehenden Ansprüche, wobei die erste Schwadeinheit (4) und die zweite Schwadeinheit (5) um jeweilige Achsen (A1, A2) drehbar sind, die sich mindestens in der ersten Konfiguration im Wesentlichen parallel zur Fahrtrichtung (D) erstrecken.

14. Seitenablagerechen nach einem der vorangehenden Ansprüche, wobei der zweite Abschnitt der ersten Schwadeinheit (4) sowohl in der ersten Konfiguration als auch in der zweiten Konfiguration bezüglich der Kupplungseinrichtung (8) auf der Seite der Transporteinrichtung (43) in die Fahrtrichtung (D) hervorsteht.

15. Landmaschine mit einer Transporteinrichtung (43) und einem Seitenablagerechen (1) nach einem der vorangehenden Ansprüche.

## Revendications

1. Râteau andaineur pour andains latéraux comprenant :
un cadre (2), pouvant être relié à un moyen de transport (43) pour être déplacé suivant un sens de déplacement (D) ;
un premier ensemble d'andainage (4) et un second ensemble d'andainage (5), de type en peigne, portés par le cadre (2) ; et
des moyens de couplage (8), configurés pour être reliés à une partie avant du moyen de transport (43) dans une première configuration et à une partie arrière du moyen de transport (43) dans une seconde configuration, de sorte que le cadre (2) soit poussé par le moyen de transport (43) dans la première configuration et soit porté par le moyen de transport (43) dans la seconde configuration ;
dans lequel le premier ensemble d'andainage (4) a une première portion, agencée entre le second ensemble d'andainage (5) et les moyens de couplage (8), et une seconde portion, faisant saillie par rapport aux moyens de couplage (8) suivant le sens de déplacement (D) sur le côté du moyen de transport (43) ;
**caractérisé en ce que** le premier ensemble d'andainage (4) et le second ensemble d'andainage (5) peuvent tourner par rapport au cadre (2) entre des positions de travail respectives, dans lesquelles le premier ensemble d'andainage (4) et le second ensemble d'andainage (5) sont abaissés, et des positions de transport respectives, dans lesquelles le premier ensemble d'andainage (4) et le second ensemble d'andainage (5) sont relevés.

2. Râteau andaineur selon la revendication 1, dans lequel le moyen de couplage (8) comprend un attelage trois points (8).

3. Râteau andaineur selon la revendication 1 ou 2, dans lequel le cadre (2) comprend une structure de pont (7), transversale par rapport au sens de déplacement (D), et une barre longitudinale (6), parallèle au sens de déplacement (D) et reliée latéralement à la structure de pont (7), et dans lequel les moyens de couplage (8) sont portés par la barre longitudinale (6).

4. Râteau andaineur selon la revendication 3, dans lequel la première portion du premier ensemble d'andainage (4) est agencée entre la structure de pont (7) et les moyens de couplage (8).

5. Râteau andaineur selon la revendication 3 ou 4, dans lequel le cadre (2) comprend un ancrage (20) fixé à une face de la structure de pont (7) orientée vers les moyens de couplage (8) et dans lequel le premier ensemble d'andainage (4) est couplé de manière rotative à l'ancrage (20).

6. Râteau andaineur selon la revendication 5, dans lequel l'ancrage (20) est réglable en hauteur.

7. Râteau andaineur selon la revendication 5 ou 6, dans lequel l'ancrage (20) comprend une barre verticale (21), pouvant coulisser dans un guide vertical (22) fixé à une traverse (12) de la structure de pont (7).

8. Râteau andaineur selon l'une quelconque des revendications précédentes, dans lequel, dans les positions de travail respectives, des premiers peignes (40) du premier ensemble d'andainage (4) et des seconds peignes (50) du second ensemble d'andainage (5) sont sensiblement parallèles et obliques par rapport au sens de déplacement (D), et le premier ensemble d'andainage (4) et le second ensemble d'andainage (5) sont agencés de sorte que, en fonctionnement, le foin déplacé par le second ensemble d'andainage (5) soit collecté et encore déplacé par le premier ensemble d'andainage (4) pour former un unique andain latéral (60).

9. Râteau andaineur selon l'une quelconque des revendications précédentes, dans lequel le premier ensemble d'andainage (4) et le second ensemble d'andainage (5) comprennent des disques intérieurs respectifs (38, 47) et des disques extérieurs respectifs (39, 48) et dans lequel le disque intérieur (38) du premier ensemble d'andainage (4) et le disque intérieur (48) du second ensemble d'andainage (5) sont agencés de sorte que, lorsque le premier ensemble d'andainage (4) et le second ensemble d'andainage (5) sont dans les positions de travail respectives, des saillies dans le sens de déplacement (D) du disque intérieur (38) du premier ensemble d'andainage (4) et du disque intérieur (48) du second ensemble d'andainage (5) se chevauchent au moins partiellement.

10. Râteau andaineur selon la revendication 9, dans lequel des axes de rotation (A1, A2) des disques intérieurs (38, 47) sont sensiblement alignés lorsque le premier ensemble d'andainage (4) et le second ensemble d'andainage (5) sont dans les positions de travail respectives.

11. Râteau andaineur selon la revendication 9 ou 10 telle qu'annexée à la revendication 3, dans lequel le disque intérieur (38) du premier ensemble d'andainage (4) est agencé entre le disque intérieur (48) du second ensemble d'andainage (5) et les moyens de couplage (8), latéralement à la barre longitudinale (6).

12. Râteau andaineur selon l'une quelconque des revendications précédentes, comprenant des moyens de levage hydrauliques (35, 41, 53) pour faire tourner le premier ensemble d'andainage (4) et le second ensemble d'andainage (5) entre les positions de travail respectives et les positions de transport respectives.

13. Râteau andaineur selon l'une quelconque des revendications précédentes, dans lequel le premier ensemble d'andainage (4) et le second ensemble d'andainage (5) peuvent tourner autour d'axes respectifs (A1, A2) sensiblement parallèles au sens de déplacement (D) au moins dans la première configuration.

14. Râteau andaineur selon l'une quelconque des revendications précédentes, dans lequel la seconde portion du premier ensemble d'andainage (4) fait saillie par rapport aux moyens de couplage (8) suivant le sens de déplacement (D) sur le côté du moyen de transport (43) à la fois dans la première configuration et dans la seconde configuration.

15. Machine agricole comprenant un moyen de transport (43) et un râteau andaineur (1) selon l'une quelconque des revendications précédentes.
